# EUROPEAN PATENT SPECIFICATION

(11) **EP 0 995 540 B1**
(45) Date of publication and mention of the grant of the patent: **17.12.2003**
(21) Application number: 99120501.4
(22) Date of filing: 15.10.1999
(51) Int. Cl.: B25B 5/12, B25B 5/16

(54) **Cylinder apparatus**
Zylinder-Vorrichtung
Dispositif à cylindre

(30) Priority: 20.10.1998 JP 29870198
(43) Date of publication of application: 26.04.2000
(73) Proprietor: SMC Kabushiki Kaisha, Minato-ku, Tokyo 105-8659 (JP)
(72) Inventor: Fukui, Chiaki, c/o SMC K. K., Tsukuba Gijutsu Cen., Tsukuba-gun, Ibaraki-ken 300-2493 (JP)
(74) Representative: KEIL & SCHAAFHAUSEN

(56) References cited:
- US-A- 4 496 138
- US-A- 4 637 597
- US-A- 4 905 973
- US-A- 5 143 361

## Description

### BACKGROUND OF THE INVENTION

### Field of the Invention:

The present invention relates to a cylinder apparatus according to the preamble of claim 1 capable of clamping a workpiece by using an arm which is rotatable by a predetermined angle in accordance with a displacement action of a piston.

### Description of the Related Art:

The cylinder apparatus has been hitherto used, for example, in order to clamp a constitutive part when the constitutive part of an automobile or the like is welded. Such an cylinder apparatus is disclosed, for example, in United States Patent No. 4,905,973.

The cylinder apparatus disclosed in United States Patent No. 4,905,973 is constructed as follows. That is, its main body is constructed by integrally combining a pair of casings which are formed substantially in a mutually symmetric manner. A cylinder unit is coupled to the main body. An arm is rotated by a predetermined angle by the aid of a toggle link mechanism provided at the inside of the main body in accordance with the driving action of the cylinder unit.

The toggle link mechanism includes a lever arm which is rotatable by a predetermined angle about a center of a rotation pin. The lever arm is provided with a stopper for making abutment against the inner wall surface of the casing to stop the rotary action of the arm when the arm is used to clamp a workpiece.

However, in the cylinder apparatus concerning the conventional technique disclosed in United States Patent No. 4,905,973, the stopper for stopping the rotary action of the arm is provided at the inside of the casing. For this reason, it is necessary to disassemble the casing when the maintenance operating is performed for the stopper. Therefore, an inconvenience arises in that the maintenance operation for the stopper is complicated, and it cannot be performed efficiently.

A power clamp comprising a cylinder apparatus according to the preamble of claim 1 is disclosed in U.S. patent 5,143,361. In this power clamp an outer link receives a pin having flat surfaces which abut stops fastened to clamp head plates when the arm is in the clamping position. Such stopper is displaced with the outer link limiting its accessibility for maintenance purposes.

### SUMMARY OF THE INVENTION

A general object of the present invention is to provide a cylinder apparatus which makes it possible to perform the maintenance operation for the stopper conveniently and efficiently without disassembling a casing.

A principal object of the present invention is to provide a clamping apparatus which makes it possible to arbitrarily set an angle of an arm to give a clamping state by conveniently changing the range or rotary action of the arm.

According to the present invention there is provided a cylinder apparatus comprising the features of claim 1. Advantageous embodiments of the invention are evident from the dependent claims.

The above and other objects, features, and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 shows a perspective view illustrating a cylinder apparatus according to an embodiment of the present invention;

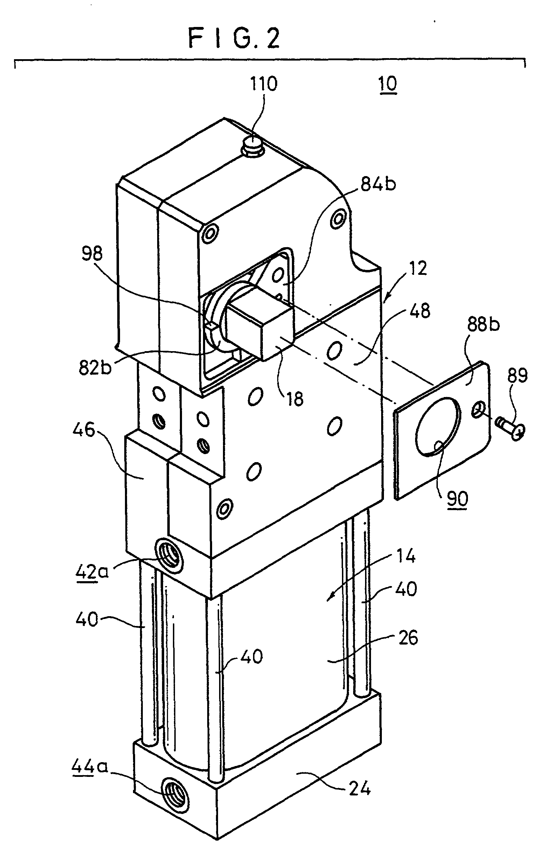

FIG. 2 shows an exploded perspective view illustrating a state in which a cover member is detached from a body of the cylinder apparatus;
FIG. 3 shows a longitudinal sectional view taken along a line III-III shown in FIG. 1;
FIG. 4 shows an exploded perspective view illustrating the body for constructing the cylinder apparatus;
FIG. 5 shows an exploded perspective view illustrating a cylinder unit for constructing the cylinder apparatus;
FIG. 6 shows a perspective view with partial cutout illustrating a state in which a circular arc-shaped projection of a support lever abuts against a plate;
FIG. 7 illustrates the action, depicting a state obtained when the arm is at the initial position;
FIG. 8 illustrates the action, depicting a state obtained when the arm makes the rotary action starting from the initial position;
FIG. 9 illustrates the action, depicting a state obtained when the arm further makes the rotary action after the state shown in FIG. 8;
FIG. 10 illustrates the action, depicting a clamping state obtained when the rotary action of the arm is stopped;
FIG. 11 shows a front view illustrating a modified embodiment of the plate; and
FIG. 12 shows a front view illustrating another modified embodiment of the plate.

### DESCRIPTION OF THE PREFERRED EMBODIMENTS

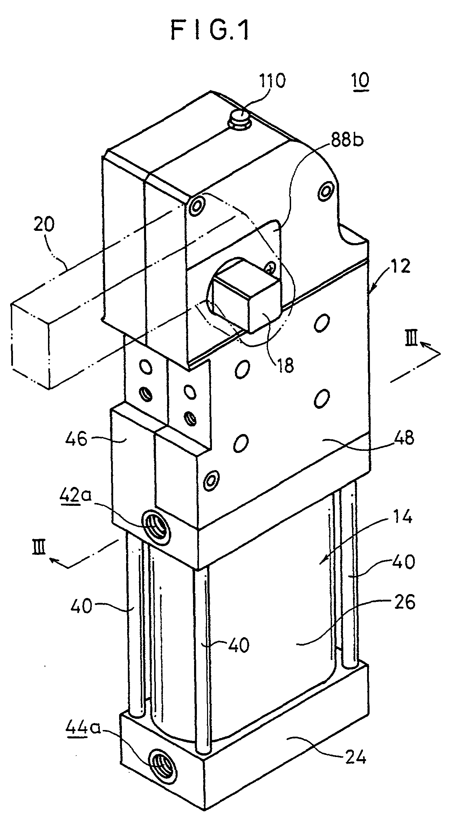

With reference to FIG. 1, reference numeral 10 indicates a cylinder apparatus according to an embodiment of the present invention.

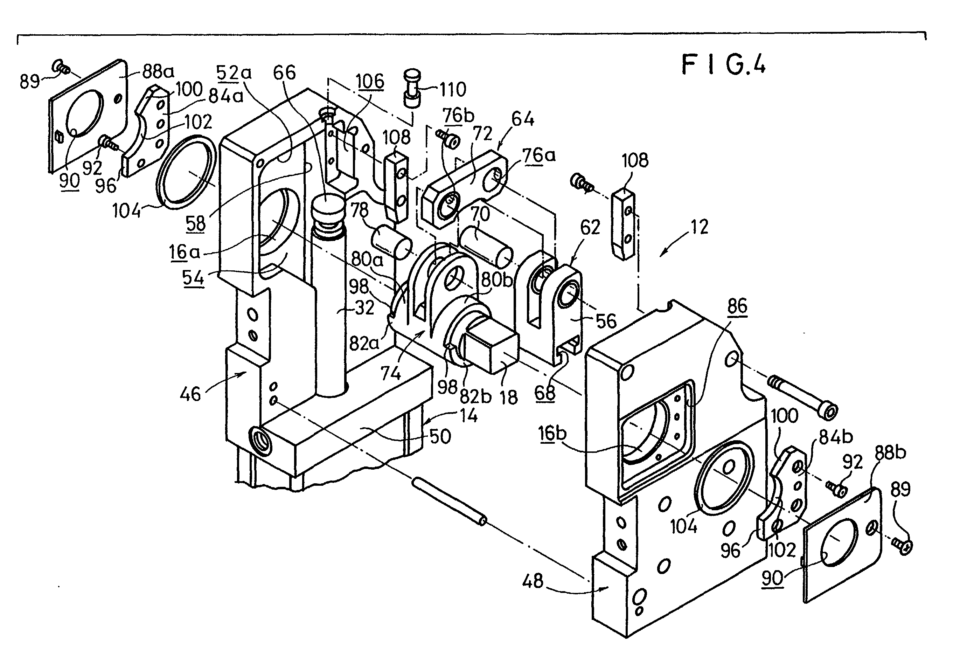

The cylinder apparatus 10 comprises a body 12 which is formed in an integrated manner to have a flat configuration, a cylinder unit 14 which is coupled in an air-tight manner to the lower end of the body 12, and an arm 20 which is coupled to a rectangular bearing section 18 protruding to the outside through a pair of substantially circular openings 16a, 16b (see FIG. 4) formed through the body 12.

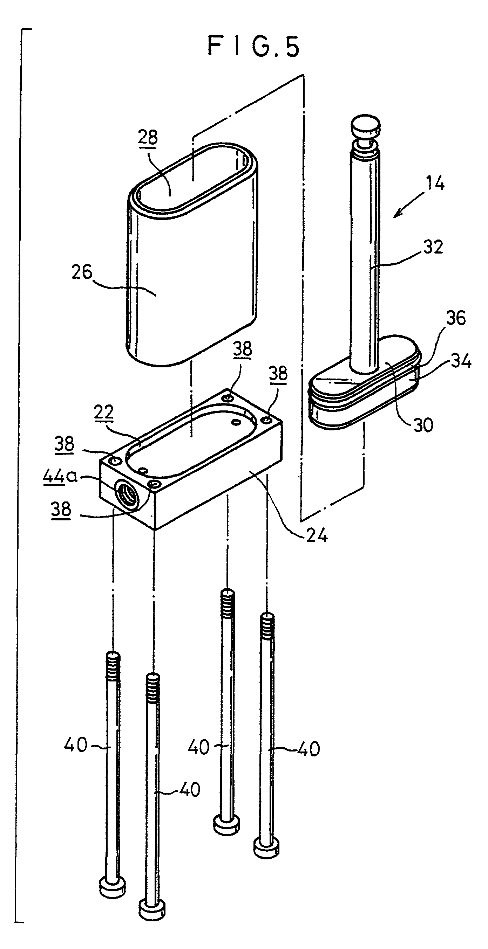

As shown in FIG. 5, the cylinder unit 14 includes an end block 24 which has an elliptic recess 22 formed on its upper surface, and a cylinder tube 26 which is composed of a cylinder having an elliptic cross section with its first end coupled in an air-tight manner to the recess 22 of the end block 24 and with its second end coupled in an air-tight manner to the bottom surface of the body 12. The cylinder unit 14 further comprises a piston 30 which is accommodated in the cylinder tube 26 and which makes reciprocating movement along a cylinder chamber 28, and a piston rod 32 which is coupled to a central portion of the piston 30 to make the displacement integrally with the piston 30.

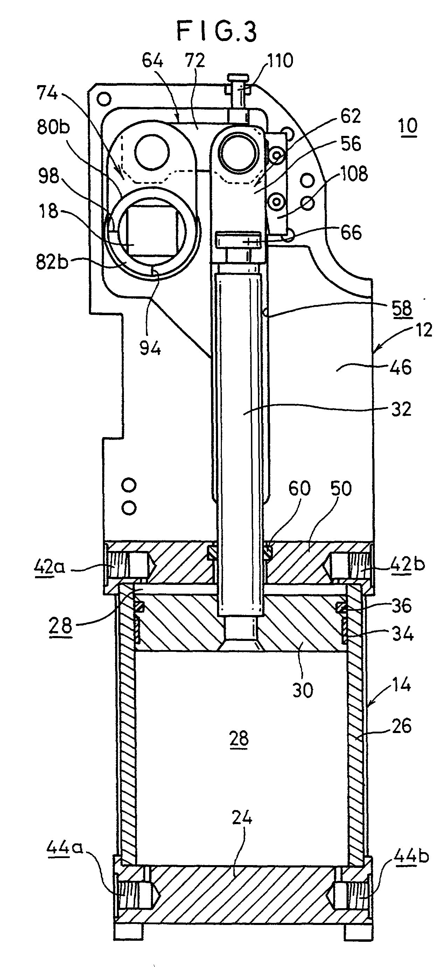

As shown in FIG. 5, a wear ring 34 and a seal ring 36 are installed to the outer circumferential surface of the piston 30 respectively. Attachment holes 38 are bored through four corner portions of the end block 24. The end block 24 and the cylinder tube 26 are assembled in an air-tight manner to the body 12 by the aid of four shafts 40 inserted through the attachment holes 38. Pairs of pressure fluid inlet/outlet ports 42a, 42b, 44a, 44b, which are used to introduce and discharge the pressure fluid (for example, compressed air) with respect to the cylinder chamber 28 respectively, are formed mutually opposingly in the body 12 and the end block 24 respectively (see FIG. 3).

When the cylinder apparatus 10 is practically used, blank caps are screwed into any pair of the pressure fluid inlet/outlet ports 42a, 44a (42b, 44b). Thus, the cylinder apparatus 10 is used in a state in which one of the pairs of pressure fluid inlet/outlet ports 42a, 44a (42b, 44b) are closed.

As shown in FIG. 4, the body 12 comprises a first casing 46 and a second casing 48 which are asymmetric and which are assembled in an integrated manner. A projection 50, which protrudes in a substantially horizontal direction and which functions as a rod cover, is formed in an integrated manner at the lower end of the first casing 46. The second casing 48 is formed to have a size in the longitudinal direction which is shortened by a thickness of the projection 50 as compared with the first casing 46. In this arrangement, as shown in FIG. 4, the body 12 can be conveniently disassembled by detaching the second casing 48 from the first casing 46 without disassembling the cylinder unit 14.

As shown in FIG. 4, a chamber 54 is formed in the body 12 by recesses 52a, 52b formed for the first casing 46 and the second casing 48 respectively (provided that the recess 52b is omitted from the illustration because it has the same structure as that of the recess 52a). The free end of the piston rod 32 is provided to face in the chamber 54. In this arrangement, the piston rod 32 is guided linearly reciprocatively by the aid of guide grooves 58 which are formed on the respective inner wall surfaces of the first casing 46 and the second casing 48 and on which a knuckle block 56 described later on is slidable, and a rod packing 60 (see FIG. 3) which is provided at a through-hole of the projection 50 for inserting the piston rod 32 therethrough.

As shown in FIG. 4, a toggle link mechanism 64, which is used to convert the rectilinear motion of the piston rod 32 into the rotary motion of the arm 20 by the aid of a knuckle joint 62, is provided at a first end of the piston rod 32. The knuckle joint 62 comprises a knuckle pin 66 having a disk-shaped projection coupled to the first end of the piston rod 32, and the knuckle block 56 having a forked section with branches separated by a predetermined distance and branched substantially in parallel to one another.

A groove 68 having a T-shaped cross section, with which the disk-shaped projection of the knuckle pin 66 is engaged, is formed at a bottom surface portion of the knuckle block 56 to extend in a substantially horizontal direction. In this arrangement, the projection of the knuckle pin 66, which is coupled to the first end of the piston rod 32, is provided slidably in the substantially horizontal direction along the groove 68. Accordingly, any backlash of the piston rod 32 in the lateral direction can be absorbed. Therefore, any backlash, which occurs in the cylinder unit 14, fails to be transmitted to the toggle link mechanism 64 and the arm 20.

As shown in FIG. 4, the toggle link mechanism 64 includes a link plate 72 which is coupled to the forked section of the knuckle joint 62 by the aid of a first pin member 70, and a support lever 74 which is rotatably supported by the pair of substantially circular openings 16a, 16b formed through the first casing 46 and the second casing 48 respectively.

The link plate 72 is allowed to intervene between the knuckle joint 62 and the support lever 74, and it functions to link the knuckle joint 62 and the support lever 74. Specifically, the link plate 72 is formed with a pair of holes 76a, 76b which are separated from each other by a predetermined spacing distance. The link plate 72 is coupled to the free end of the piston rod 32 via the knuckle joint 62 and the first pin member 70 rotatably attached to the first hole 76a. The link plate 72 is coupled to the forked section of the support lever 74 via a second pin member 78 rotatably attached to the second hole 76b.

The support lever 74 includes a forked section which is formed with holes for rotatably attaching the second pin member 78, the bearing section 18 which is formed to protrude in a direction substantially perpendicular to the axis of the piston rod 32 and which has a rectangular cross section exposed to the outside from the body 12 through the opening 16b, a pair of circumferential sections 80a, 80b which are formed adjacently with the forked section interposed therebetween and which are fitted to the substantially circular openings 16a, 16b of the body 12 respectively, and a pair of circular arc-shaped projections 82a, 82b which are formed to slightly protrude in the lateral direction from the circumferential sections 80a, 80b and which are exposed to the outside from the body 12 through the openings 16a, 16b respectively. The arm 20 for claiming an unillustrated workpiece is detachably installed to the bearing section 18.

The support lever 74 is provided to make the rotary action integrally with the arm 20. The circular arc-shaped projections 82a, 82b, which are formed on the support lever 74, abut against plates 84a 84b fixed to the body 12 (as described later on). Accordingly, the circular arc-shaped projections 82a, 82b function as the stopper for stopping the rotary action of the arm 20.

The rectilinear motion of the piston rod 32 is transmitted to the support lever 74 via the knuckle joint 62 and the link plate 72. The support lever 74 is provided rotatably by a predetermined angle about the center of rotation of the circumferential sections 80a, 80b which are supported by the pair of openings 16a, 16b formed through the body 12.

As shown in FIG. 4, oblong recesses 86 are formed on the side surfaces of the first casing 46 and the second casing 48 for constructing the body 12 respectively. The recesses 86 are closed by a pair of cover members 88a, 88b. The cover members 88a, 88b are installed detachably by the aid of screw members 89. In this arrangement, the bearing section 18 of the support lever 74 is provided to be exposed to the outside through a substantially circular opening 90 which is formed at a substantially central portion of the cover member 88b.

The plates 84a, 84b, which make abutment against the circular arc-shaped projections 82a, 82b of the support lever 74 to stop the rotary action of the arm 20, are fixed on the wall surfaces of the recesses 86 by the aid of screw members 92.

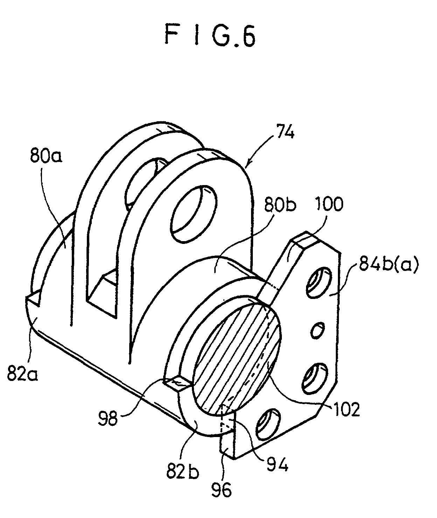

As shown in FIG. 6, the plate 84b (84a) has a first abutment surface 96 for making abutment against a first end surface 94 of the circular arc-shaped projection 82b (82a), and a second abutment surface 100 for making abutment against a second end surface 98 of the circular arc-shaped projection 82b (82a). A curved surface 102 for surrounding the support lever 74 is formed between the first abutment surface 96 and the second abutment surface 100. The first end surface 94 and the second end surface 98 of the support lever 74 are formed so that they are separated from each other by an angle of about 90 degrees.

As shown in FIG. 4, a ring-shaped scraper 104 is installed via an annular step to each of the substantially circular openings 16a, 16b of the first casing 46 and the second casing 48 in order to prevent the chamber 54 of the body 12 from invasion of any dust or the like.

Recesses 106 having a rectangular cross section are formed at upper corner portions of the inner wall surfaces of the first casing 46 and the second casing 48 for constructing the body 12 respectively. A pair of reaction force-receiving plates 108 are fixed by screw members to the recesses 106, for receiving the reaction force upon the abutment of the knuckle joint 62 when the clamping state is given. The pair of guide grooves 58, which are composed of rectangular grooves and which extend in the vertical direction, are provided mutually opposingly on the inner wall surfaces of the first casing 46 and the second casing 48. The knuckle block 56 is interposed between the pair of guide grooves 58. The knuckle block 56 is provided slidably in the vertical direction in accordance with the guiding action of the guide grooves 58.

As shown in FIG. 4, a manual release pin 110 is provided at an upper portion of the body 12, for releasing the cylinder apparatus 10 from the clamping state to restore it to the unclamping state when the manual release pin 110 is pressed downwardly by an operator in accordance with the manual operation.

The cylinder apparatus 10 according to the embodiment of the present invention is basically constructed as described above. Next, its operation, function, and effect will be explained.

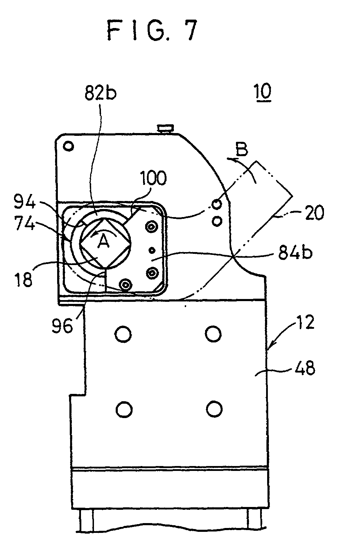

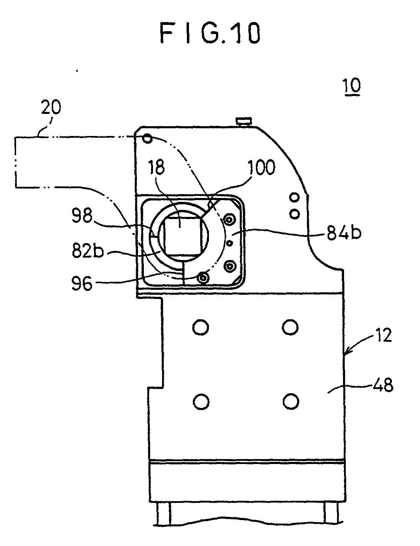

At first, the cylinder apparatus 10 is fixed to a predetermined position by the aid of an unillustrated fixing means. First ends of pipes such as unillustrated tubes are connected to the pair of pressure fluid inlet/outlet ports 42a, 44a (42b, 44b) respectively. Second ends of the pipes are connected to an unillustrated pressure fluid supply source. FIG. 7 shows the cylinder apparatus 10 in the unclamping state, and FIG. 10 shows the cylinder apparatus 10 in the clamping state. The following description will be made assuming that the unclamping state shown in FIG. 7 represents the initial position.

After performing the preparatory operation as described above, the unillustrated pressure fluid supply source is energized at the initial position shown in FIG. 7 to introduce the pressure fluid from the first pressure fluid inlet/outlet port 44a into the cylinder chamber 28 disposed at the lower side. The piston 30 is pressed in accordance with the action of the pressure fluid introduced into the cylinder chamber 28. The piston 30 is moved upwardly along the cylinder chamber 28. During this process, the guiding action is effected by the wear ring 34 which is installed to the outer circumferential surface of the piston 30 and the guide grooves 58 along which the knuckle block 56 makes the sliding movement. Accordingly, the linear accuracy is maintained for the piston 30 and the piston rod 32.

The rectilinear motion of the piston 30 is transmitted to the toggle link mechanism 64 via the piston rod 32 and the knuckle joint 62, and it is converted into the rotary motion of the arm 20 in accordance with the rotary action of the support lever 74 which constitutes the toggle link mechanism 64.

That is, the rectilinear motion (upward movement) of the piston 30 allows the force to act so that the link plate 72 and the knuckle joint 62 engaged with the free end of the piston rod 32 are pressed in the upward direction. Owing to the pressing force exerted on the link plate 72, the link plate 72 is rotated by a predetermined angle about the support point of the first pin member 70, and the support lever 74 is rotated in the direction of the arrow A in accordance with the linking action of the link plate 72.

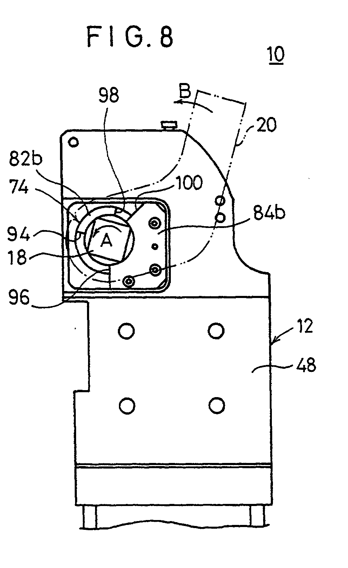

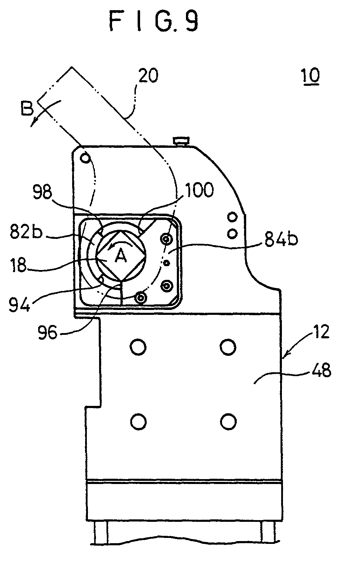

Therefore, the arm 20 is rotated by a predetermined angle in the direction of the arrow B about the support point of the bearing section 18 of the support lever 74. Accordingly, the circular arc-shaped projection 82b (82a) is rotated by the predetermined angle integrally with the support lever 74 (see FIGS. 8 and 9).

In accordance with the process in which the arm 20 is rotated in the direction of the arrow B as described above, the first end surface 94 of the circular arc-shaped projection 82b (82a) abuts against the first abutment surface 96 of the plate 84b (84a) which is fixed to the body 12. Accordingly, the arm 20 stops the rotary action. As a result, the clamping state is given, in which the workpiece is clamped by the arm 20 (see FIG. 10). After the arm 20 stops the rotary action, the piston 30 and the piston rod 32 are slightly moved upwardly. The reaction force, which is exerted when the workpiece is clamped, is received by the reaction force-receiving plates 108 against which the link plate 72 abuts.

On the other hand, when the pressure fluid is supplied to the pressure fluid inlet/outlet port 42a in accordance with the switching action of an unillustrated changeover valve in the state shown in FIG. 10, the piston 30 is moved downwardly. Further, the support lever 74 is rotated in a direction opposite to the direction described above by the aid of the link plate 72 in accordance with the downward movement action of the piston rod 32. Accordingly, the arm 20 is rotated in a direction to make separation from the workpiece.

During the process in which the arm 20 is rotated in the direction to make separation from the workpiece, the second end surface 98 of the circular arc-shaped projection 82b (82a) abuts against the second abutment surface 100 of the plate 84b (84a) which is fixed to the body 12. Accordingly, the arm 20 stops the rotary action. As a result, the cylinder apparatus 10 is restored to the initial position shown in FIG. 7.

In the embodiment of the present invention, the circular arc-shaped projections 82a, 82b, which function as the stopper, are exposed to the outside of the body 12 through the substantially circular openings 16a, 16b formed through the body 12. In other words, the stopper for stopping the rotary action of the arm 20 is provided at the outside of the body 12. Therefore, any dust or the like, which adhere to the circular arc-shaped projections 82a, 82b and the plates 84a, 84b, can be conveniently removed only by detaching the cover members 88a, 88b installed to the body 12 without disassembling the first casing 46 and the second casing 48 for constructing the body 12. Therefore, it is possible to perform the maintenance operation conveniently and efficiently for the circular arc-shaped projections 82a, 82b and the plates 84a, 84b which function as the stopper.

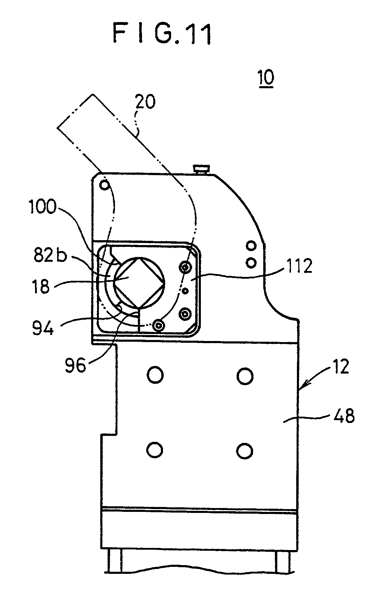

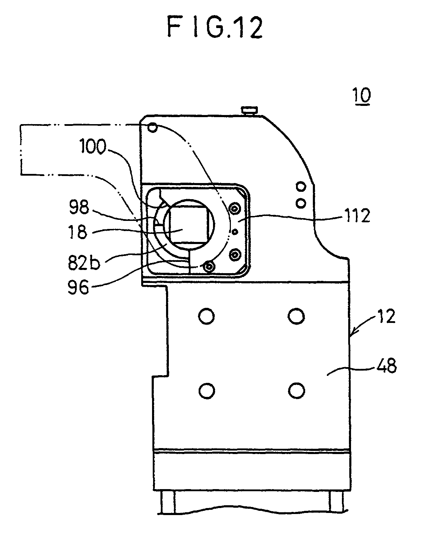

In the embodiment of the present invention, the plates 84a, 84b, which abut against the circular arc-shaped projections 82a, 82b, are detachably installed to the body 12 by the aid of the screw members 89. Therefore, the present invention is advantageous in that the range of the rotary action of the arm 20 can be conveniently changed to arbitrarily set the angle of the arm 20 at which the arm 20 is in the clamping state, by exchanging the plates 84a, 84b with other plates 112 having different angles of the first abutment surface 96 and the second abutment surface 100 for making abutment against the circular arc-shaped projections 82a, 82b (see FIGS. 11 and 12).

## Claims

1. A cylinder apparatus capable of clamping a workpiece comprising:
a housing (12);
a cylinder unit (14) coupled to one end of said housing (12), accommodating therein a piston (30) capable of carrying out reciprocable movement within the cylinder chamber (28) along the axis of the cylinder chamber (28);
a toggle link mechanism (64) provided at the inside of said housing (12), for converting rectilinear motion of a piston rod (32) coupled to said piston (30) and extending inside said housing (12) into rotational motion of an arm (20) for clamping a workpiece;
a support lever (74) rotatably mounted in said housing (12), said arm (20) being coupled to said toggle link mechanism (64), said arm (20) being mounted on the support lever (74) and being jointly rotatable therewith about a predetermined angle in reaction to a driving stroke of said piston (30) of said cylinder unit (14); and
a stopper for stopping rotary action of said arm (20)
**characterized in that** said stopper is mounted on said support lever (74) of said arm (20) for jointly rotating with said arm (20) and is exposed to the outside of said housing (12),
that said support lever (74) is exposed to the outside through openings (16a, 16b) formed through said housing (12), and
that said stopper comprises projections (82a, 82b) having the shape of a ring segment which are formed at both ends of said support lever (74), wherein said projections (82a, 82b) stop said rotary action of said arm (20) by making abutment against plates (84a, 84b) coupled to said housing (12).

2. The cylinder apparatus according to claim 1, wherein said plates (84a, 84b) are installed detachably to said body (12).

3. The cylinder apparatus according to claim 1, wherein said plate (84a, 84b) is formed with a first abutment surface (96) for making abutment against a first end surface (94) of said projection (82a, 82b), and a second abutment surface (100) for making abutment against a second end surface (98) of said projection (82a, 82b).

4. The cylinder apparatus according to claim 3, wherein a range of said rotary action of said arm (20) is regulated by setting a predetermined angle of separation between said first abutment surface (96) and said second abutment surface (100) formed on said plate (112).

5. The cylinder apparatus according to claim 1, wherein said body (12) includes a first casing (46) and a second casing (48) which are formed in an asymmetric manner, and said first casing (46) and said second casing (48) are dividable while maintaining a state in which said cylinder unit (14) is coupled.

## Patentansprüche

1. Zylindervorrichtung, die in der Lage ist, ein Werkstück zu klemmen, mit:
einem Gehäuse (12);
einer Zylindereinheit (14), die mit einem Ende des Gehäuses (12) gekoppelt ist und einen Kolben (30) aufnimmt, der in der Lage ist, entlang der Achse der Zylinderkammer (28) eine hin und her gehende Bewegung in der Zylinderkammer (28) durchzuführen;
einem Kniehebelmechanismus (64), der im Inneren des Gehäuses (12) vorgesehen ist, um eine geradlinige Bewegung einer Kolbenstange (32), die mit dem Kolben (30) gekoppelt ist und sich innerhalb des Gehäuses (12) erstreckt, in eine Drehbewegung eines Arms (20) zum Klemmen eines Werkstücks umzuwandeln;
einem Stützhebel (74), der drehbar in dem Gehäuse (12) angebracht ist, wobei der Arm (20) mit dem Kniehebelmechanismus (64) gekoppelt ist, wobei der Arm (20) an dem Stützhebel (74) angebracht ist und gemeinsam mit diesem entsprechend eines Antriebshubes des Kolbens (30) der Zylindereinheit (14) um einen festgelegten Winkel drehbar ist; und
einem Stopper zum Stoppen der Drehbewegung des Armes (20),
**dadurch gekennzeichnet, dass** der Stopper an dem Stützhebel (74) des Armes (20) angebracht ist, um sich gemeinsam mit dem Arm (20) zu drehen, und zum Äußeren des Gehäuses (12) exponiert ist,
dass der Stützhebel (74) durch Öffnungen (16a, 16b), die durch das Gehäuse (12) ausgebildet sind, nach außen exponiert ist und
dass der Stopper Vorsprünge (82a, 82b) in Form eines Ringsegmentes aufweist, die an beiden Enden des Stützhebels (74) ausgebildet sind, wobei die Vorsprünge (82a, 82b) die Drehwirkung des Armes (20) durch Anlage an Platten (84a, 84b), die mit dem Gehäuse (12) gekoppelt sind, anhalten.

2. Zylindervorrichtung nach Anspruch 1, wobei die Platten (84a, 84b) lösbar an dem Körper (12) angebracht sind.

3. Zylindervorrichtung nach Anspruch 1, wobei die Platte (84a, 84b) eine erste Anlagefläche (96) zur Anlage gegen eine erste Endfläche (94) des Vorsprungs (82a, 82b) und eine zweite Anlagefläche (100) zur Anlage gegen eine zweite Endfläche (98) des Vorsprungs (82a, 82b) aufweist.

4. Zylindervorrichtung nach Anspruch 2, wobei ein Bereich der Drehbewegung des Armes (20) durch Einstellen eines festgelegten Trennwinkels zwischen der ersten Anlagefläche (96) und der zweiten Anlagefläche (100), die an der Platte (112) ausgebildet sind, reguliert wird.

5. Zylindervorrichtung nach Anspruch 1, wobei der Körper (12) ein erstes Gehäuse (46) und ein zweites Gehäuse (48) aufweist, die in asymmetrischer Weise ausgebildet sind, und wobei das erste Gehäuse (46) und das zweite Gehäuse (48) unterteilbar sind, wobei ein Zustand beibehalten wird, in welchem die Zylindereinheit (14) gekoppelt ist.

## Revendications

1. Dispositif de vérin apte à serrer une pièce à usiner, comprenant :
un bâti (12) ;
une unité de vérin (14), couplée à une extrémité dudit bâti (12), logeant à l'intérieur un piston (30), apte à exécuter un mouvement de va-et-vient à l'intérieur de la chambre du vérin (28), le long de l'axe de la chambre du vérin (28) ;
un mécanisme à genouillère (64), disposé à l'intérieur dudit bâti (12), pour convertir un mouvement rectiligne d'une tige de piston (32, couplée audit piston (30) et s'étendant à l'intérieur dudit bâti (12) en un mouvement rotatif d'un bras (20) pour serrer une pièce à usiner ;
un levier support (74), monté à rotation dans ledit bâti (12), ledit bras (20) étant couplé audit mécanisme à genouillère (64), ledit bras (20) étant monté sur le levier support (74) et étant rotatif conjointement avec celui-ci autour d'un angle préalablement déterminé en réaction à une course d'entraînement dudit piston (30) de ladite unité de vérin (14) et
un arrêt pour arrêter l'action rotative dudit bras (20),
**caractérisé en ce que** ledit arrêt est monté sur ledit levier support (74) dudit bras (20) pour tourner conjointement avec ledit bras (20) et est exposé vers l'extérieur dudit bâti (12) ;
que ledit levier support (74) est exposé vers l'extérieur par l'intermédiaire d'ouvertures (16a, 16b) pratiquées à travers ledit bâti (12) et
que ledit arrêt comprend des projections (82a, 82b) ayant la forme d'un segment annulaire, qui sont formées aux deux extrémités dudit levier support (74), lesdites projections (82a, 82b) arrêtant ladite action rotative dudit bras (20) en butant contre des plaques (84a, 84b), couplées audit bâti (12).

2. Dispositif de vérin selon la revendication 1, dans lequel lesdites plaques (84a, 84b) sont installées de manière amovible sur ledit corps (12).

3. Dispositif de vérin selon la revendication 1, dans lequel ladite plaque (84a, 84b) est formée d'une première surface de butée (96) pour buter contre une première surface d'extrémité (94) de ladite projection (82a, 82b) et une deuxième surface de butée (100) pour butée contre une deuxième surface d'extrémité (98) de ladite projection (82a, 82b).

4. Dispositif de vérin selon la revendication 3, dans lequel une série de ladite action rotative dudit bras (20) est régulée en réglant un angle préalablement déterminé de séparation entre ladite première surface de butée (96) et ladite deuxième surface de butée (100) formée sur ladite plaque (112).

5. Dispositif de vérin selon la revendication 1, dans lequel ledit corps (12) comporte une première enveloppe (46) et une deuxième enveloppe (48), qui sont formées d'une manière asymétrique et ladite première enveloppe (46) et ladite deuxième enveloppe (48) sont divisibles, tout en maintenant un état, dans lequel ladite unité de vérin (14) est couplée.
